# EUROPEAN PATENT APPLICATION

(11) **EP 4 528 566 A1**
(43) Date of publication of application: **26.03.2025**
(21) Application number: 23211889.3
(22) Date of filing: 24.11.2023
(51) Int. Cl.: G06F 21/62

(54) **GENERALIZING DATA RECORDS**

(30) Priority: 25.09.2023 WO PCT/CN2023/120944
(71) Applicant: Koninklijke Philips N.V., 5656 AG Eindhoven (NL)
(72) Inventor: DOU, Zhi Wei, Eindhoven (NL); YAN, Iris, Eindhoven (NL)
(74) Representative: Philips Intellectual Property & Standards

(57) **Abstract**

A mechanism for performing generalization on data records. The data records are clustered to produce one or more clusters of data records. In each cluster, any property that is attributed to a subject of any data record in the cluster is identified. An iterative process is performed for each cluster comprising processing sets of the identified properties, wherein the number of properties in a set is N, to identify any/all set(s) of properties for which between 0 and k data records have binary values that attribute all of those properties of the set to the said data records. In the cluster, the binary data value for one or more of the properties in each identified set of properties is generalized. The iterative process is repeated m times, with the value of N increasing by one for each iterative process.

## Description

### FIELD OF THE INVENTION

The present invention relates to the field of data processing, and in particular to the generalizing of data records.

### BACKGROUND OF THE INVENTION

With the ongoing popularity of machine-learning methods, there is an ever-increasing demand for large datasets of data records for training machine-learning algorithms to perform a particular task. However, it is common for each data record to be unique or near-unique to a particular individual or subject, meaning that it may be possible to identify a data record for a specific individual or subject in contravention of information protection law.

There is therefore a need for approaches that anonymize and/or generalize data records, at least to avoid such contravention. A new approach that provides improved generalization or anonymization of data records would therefore be advantageous.

### SUMMARY OF THE INVENTION

The invention is defined by the claims.

According to examples in accordance with an aspect of the invention, there is provided a computer-implemented method for generalizing data records.

The computer-implemented method comprises: obtaining a plurality of binary data records, each binary data record comprising a plurality of binary values each associated with a different property for a subject of the binary data record, where each binary value identifies whether or not the property is attributed to the subject of the binary data record; performing a clustering process on the plurality of binary data records to produce at least one cluster of binary data records; and for each cluster of binary data records, performing one or more iterations of a generalizing process.

The generalizing process comprises identifying, as identified properties, any properties for which a non-zero number of binary values of any data records in said cluster attribute said property to their respective binary data records; identifying any sets of properties, wherein each set comprises a different combination of N identified properties; and performing a generalization assessment process for each set of properties.

The generalization assessment process comprises: a first step of identifying the number of condition meeting binary data records, wherein each condition meeting binary data record contains binary values that attribute each of the set of properties to their corresponding binary records; and a second step of, responsive to the number of condition meeting binary data records being greater than 0 and less than a first predetermined number, generalizing, in all binary data records of the cluster of binary data records, the binary values associated with the set of properties.

The value of N begins at 1 and increases by 1 for each iteration of the generalizing process.

The present disclosure provides a technique for producing a k^{m}-anonymous dataset without a pre-defined generalization hierarchy and with minimal generalization to the values of the dataset. The proposed approach makes use of clustering to group binary data records together, before processing each cluster of binary data records to generalize binary data values that would allow for specific identification of fewer than a first predetermined number (e.g., k) of data records when searching for specific combinations of values for the properties.

The proposed approach facilitates the generalization of data records without loss of significant information in the dataset containing the data records.

In some examples, obtaining the plurality of binary data records comprises obtaining a plurality of data records, wherein each data record comprises a plurality of non-binary values that each identify a different property attributed to a subject of the data record; and converting each data record into a binary data record.

This facilitates an approach for generalizing a dataset of data records comprising non-binary values that identify properties associated with a subject of the data record. This increases the availability and applicability of the proposed method to a wider range of datasets, particularly those containing categorical information.

In some examples, the step of converting each data record into a binary data record comprises: identifying, as binary data record properties, all properties identified by any non-binary value of any of the plurality of data records; and for each data record, generating a binary value for each binary data record property, each generated binary value identifying whether or not the data record contains a non-binary value that identifies that the subject is associated with the binary data record property. This provides a technique for reliable and accurate conversion of non-binary values into a binary value.

In some examples, at least one cluster of binary data records contains less than a second predetermined number of clusters. The second predetermined number of clusters may be the total number of binary data records divided by the first predetermined number.

In some examples, performing a clustering process comprises: clustering the plurality of binary data records using a first clustering algorithm; and combining any cluster of binary data records having fewer than the first predetermined number of binary data records with a nearest cluster of binary data records.

In some examples, performing a clustering process comprises: clustering the plurality of binary data records using a second clustering algorithm; and removing any cluster of binary data records having fewer than the first predetermined number of binary data records from the at least one cluster of binary data records.

These approaches avoid the number of binary data records in a single cluster of binary data records being less than the first predetermined number, which might otherwise cause all binary values in such clusters being generalized.

In some examples, generalizing a binary value comprises marking the binary value as having an unknown value. This provides a reliable mechanism for generalizing a binary value.

In some examples, performing the generalization assessment process for each set of properties comprises sequentially performing an iteration of the generalization assessment process on each set of properties in turn.

In some examples, performing the generalization assessment process for each set of properties comprises: performing the first step of each generalization assessment process sequentially; and performing the second step of each generalization assessment process in parallel to one another.

In some examples, for each identified cluster, the performing one or more iterations of the generalizing process is terminated responsive to, after performing any generalization assessment process, the number of properties associated with binary values that are not generalized is fewer than 2.

The one or more iterations of the generalizing process may comprise a third predetermined number of iterations. The third predetermined number of iterations may define the value of m in the desired k^{m}-anonymous dataset. Alternatively, the third predetermined number of iterations may be defined as the value of m in the desired k^{m}-anonymous dataset.

The method may further comprise outputting the plurality of binary data records after performing the one or more iterations of the generalizing process for each cluster of binary data records.

The method may comprise, after performing the one or more iterations of the generalizing process for each cluster of binary data records: converting each binary data record into a respective data record containing one or more non-binary values by, for each binary data record: for each binary value that associates a property with the subject of the binary data record, defining, for the data record, a non-binary value identifying said associated property with the data record; for each generalized binary value, defining, for the data record, a non-binary value that identifies an uncertain relationship between the subject of the data record and the property associated with the generalized binary value

There is also proposed a computer program product comprising computer program code means which, when executed on a computing device having a processing system, cause the processing system to perform all of the steps of any herein disclosed method.

There is also proposed a processing system for generalizing data records. The processing system is configured to: obtain a plurality of binary data records, each binary data record comprising a plurality of binary values each associated with a different property for a subject of the binary data record, where each binary value identifies whether or not the property is attributed to the subject of the binary data record; perform a clustering process on the plurality of binary data records to produce at least one cluster of binary data records; and for each cluster of binary data records, perform one or more iterations of a generalizing process.

The generalizing process comprises identifying, as identified properties, any properties for which a non-zero number of binary values of any data records in said cluster attribute said property to their respective binary data records; identifying any sets of properties, wherein each set comprises a different combination of N identified properties; and performing a generalization assessment process for each set of properties.

The generalization assessment process comprises: a first step of identifying the number of condition meeting binary data records, wherein each condition meeting binary data record contains binary values that attribute each of the set of properties to their corresponding binary records; and a second step of, responsive to the number of condition meeting binary data records being greater than 0 and less than a first predetermined number, generalizing, in all binary data records of the cluster of binary data records, the binary values associated with the set of properties.

The value of N begins at 1 and increases by 1 for each iteration of the generalizing process.

The skilled person would be readily capable of adapting the processing system to perform the functions of any herein disclosed method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a proposed method;
Fig. 2 illustrates a first example of a clustering process;
Fig. 3 illustrates a second example of a clustering process;
Fig. 4 illustrates an example approach for obtaining a plurality of binary data records; and
Fig. 5 illustrates another proposed method.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for performing generalization on data records. The data records are clustered to produce one or more clusters of data records. In each cluster, any property that is attributed to a subject of any data record in the cluster is identified. An iterative process is performed for each cluster comprising processing sets of the identified properties, wherein the number of properties in a set is N, to identify any/all set(s) of properties for which between 0 and k data records have binary values that attribute all of those properties of the set to the said data records. In the cluster, the binary data value for one or more of the properties in each identified set of properties is generalized. The iterative process is repeated m times, with the value of N increasing by one for each iterative process.

The present disclosure relates to a method of generalizing (binary) data records.

More generally, the present disclosure provides a technique based on the k^{m}-anonymity model. In this model, a dataset D is considered k^{m}-anonymous if any attacker knowing up to m values of a record tED, is not able to use this knowledge to identify fewer than k records in D. The present disclosure provides a technique achieving k^{m}-anonymity for a plurality of (binary) data records, i.e., forming a dataset of (binary) data records.

In the context of the present disclosure, a binary data value is generally a data value that is able to have one of two possible values. However, it is possible for a binary data value to take a third value representing "uncertain", "null", "unknown" or "either", e.g., if the binary data value has been generalized according to a proposed process. Configurations for such binary data values are well known.

A binary data value will be associated with a binary variable or property. An alternative label for a binary data value is a dichotomous data value, and an alternative label for a binary variable or property is a dichotomous variable or property.

Each binary data record is associated with a different subject (e.g., a different individual or human). Each binary data record comprises a plurality of binary values. Each binary value is associated with a different (potential) property for the subject of the binary data record, indicating whether or not said property is associated with the subject.

Thus, the dataset of binary data records may comprise Q binary data records. Each binary data record contains a binary value for each of N properties. The binary value (e.g., 0 or 1) indicates whether the corresponding (nth) property is associated with the subject of the binary data record.

As an example, a binary value of 1 may indicate that the corresponding property is to be associated with the subject, whereas a binary value of 0 may indicate that the corresponding property is not to be associated with the subject. Of course, this correspondence may be reversed in some variations (e.g., such that a binary value of 0 indicates that the corresponding property is to be associated with the subject).

Table 1 illustrates a portion of a (generic) plurality binary data records. The binary values indicated in Table 1 are mere examples for the sake of illustration.

**TABLE 1**

| | Property | | | |
|---|---|---|---|---|
| Subject | A | B | ... | N |
| 1 | 1 | 0 | ... | 1 |
| 2 | 1 | 1 | ... | 0 |
| ⋮ | ⋮ | ⋮ | ⋮ | ⋮ |
| Q | 0 | 1 | ... | 1 |

In the following description, a proposed (general) method will be explained in the context of generalizing an example set of binary data records. This is provided for the sake of improved contextual understanding. Table 2 illustrates the example set of (5) binary data records that are to be used.

As a working example, each "subject" may represent a different student in an educational facility and each "property" may represent a class (e.g., school subject) that may be taken by a student (e.g., Chinese, Math, English, French, Physics and so on). As another working example, each "subject" may represent a shopper at a store and each "property" may represent an item purchased by the shopper during a visit to the store (e.g., "Milk", "Cheese", "Bread" and so on).

For the purposes of the example set of binary data records, a binary value of 1 indicates that the corresponding property is to be associated with the subject of the data records containing the binary value, whereas a binary value of 0 indicates that the corresponding property is not to be associated with said subject.

**TABLE 2**

| | Property | | | | |
|---|---|---|---|---|---|
| Subject | Property A | Property B | Property C | Property D | Property E |
| 1 | 1 | 1 | 1 | 0 | 1 |
| 2 | 1 | 0 | 1 | 1 | 0 |
| 3 | 0 | 0 | 1 | 0 | 1 |
| 4 | 0 | 1 | 1 | 0 | 0 |
| 5 | 1 | 0 | 0 | 1 | 0 |

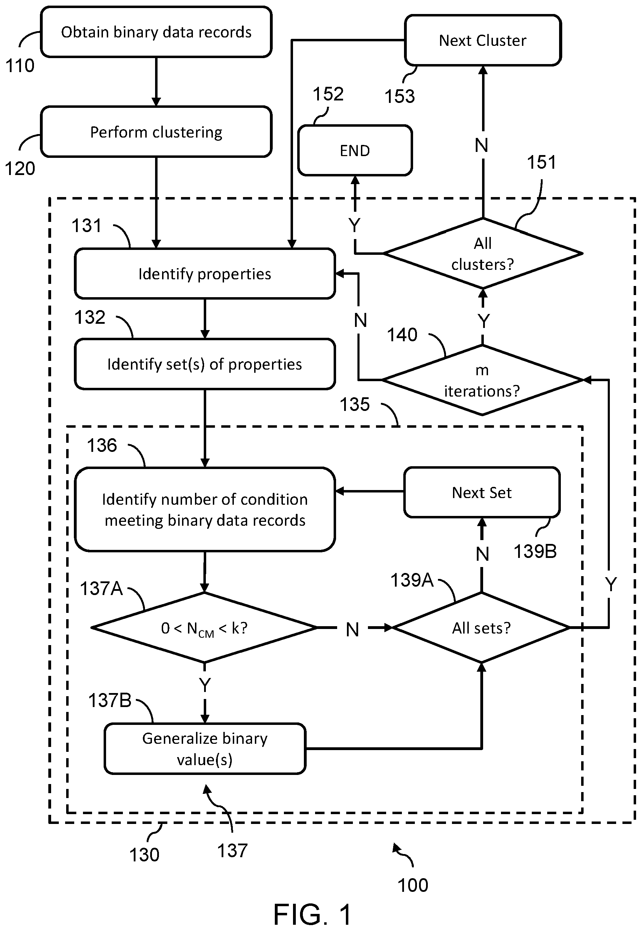

Fig. 1 provides a flowchart illustrating a computer-implemented method 100 for generalizing data records. The computer-implemented method may be implemented by a processing system, suitable embodiments of which are later described.

The method 100 comprises a step 110 of obtaining a plurality of binary data records. The plurality of binary data records may, for instance, be obtained, retrieved or otherwise received from an external processing system or memory, or may be generated by the processing system performing the method 100. The content of the plurality of binary data records has been previously explained. Example techniques for producing binary data records are provided later in this disclosure.

The plurality of binary data records may effectively form a binary dataset.

The method 100 also comprises a step 120 of performing a clustering process on the plurality of binary data records to produce at least one cluster of binary data records. The clustering process acts to group together similar binary data records, e.g., binary data records that share similar combinations of binary values for different properties.

Appropriate clustering techniques for use with binary data records will be apparent to the skilled person. As an example, some clustering techniques are able to recognize similarities between binary variables, for instance, the k-modes algorithm (e.g., the kmodes function available in the klaR package for R programming). k-modes algorithms study the pertinent asymptotic behavior, and the modes give characteristic descriptions of clusters.

Suitable examples of clustering algorithms include those set out by: Li, Tao. "A general model for clustering binary data." Proceedings of the eleventh ACM SIGKDD international conference on Knowledge discovery in data mining. 2005; Ordonez, Carlos. "Clustering binary data streams with k-means." Proceedings of the 8th ACM SIGMOD workshop on Research issues in data mining and knowledge discovery. 2003; Li, Tao. "A unified view on clustering binary data." Machine Learning 62 (2006): 199-215, amongst others.

Further examples of suitable clustering processes are provided later in this disclosure.

Table 3 illustrates the outcome of performing a clustering process on the example set of binary data records, first set out in Table 2. Subjects number 1, 3 and 4 have been clustered into a first cluster, with subjects number 2 and 5 being clustered into a second cluster.

**TABLE 3**

| | Property | | | | | |
|---|---|---|---|---|---|---|
| Subject | A | B | C | D | E | Cluster |
| 1 | 1 | 1 | 1 | 0 | 1 | 1 |
| 2 | 1 | 0 | 1 | 1 | 0 | 2 |
| 3 | 0 | 0 | 1 | 0 | 1 | 1 |
| 4 | 0 | 1 | 1 | 0 | 0 | 1 |
| 5 | 1 | 0 | 0 | 1 | 0 | 2 |

The method also comprises, for each cluster of binary data records, performing one or more iterations of a generalizing process 130. The number of iterations may be predefined (e.g., by a user or as a default number).

In particular, the number of iterations may define the value of m, being the maximum number of properties of a single record for which a potential attacker is unable to distinguish fewer than k records. Thus, the number of iterations may be the value for m in the k^{m} anonymous model. It will be appreciated that the value for m is predefined, e.g., during a set-up process or representing a default value for the k^{m} anonymization.

The generalizing process 130 comprises a step 131 of identifying, as identified properties, any properties for which a non-zero number of binary values of any data records in said cluster attribute said property to their respective binary data records.

Performing step 131 significantly reduces a workload of a subsequent generalizing assessment process.

For the example set of binary data records, performing step 131 for the first cluster (at least during a first iteration of the generalizing process) identifies properties A, B, C and E (but not D) as identified properties. For the example set of binary data records, performing step 131 for the second cluster (at least during a first iteration of the generalizing process) identifies properties A, C, D (but not B or E) as identified properties.

The generalizing process 130 also comprises a step 132 of identifying any sets of properties. Each set comprises a different combination of N identified properties. The value of N begins at 1 and increases by 1 for each iteration of the generalizing process. Thus, a set of properties may, at least for a first iteration of the generalizing process, comprise or contain a single property.

Thus, for a first iteration of the generalizing process, performing step 132 for the first cluster identifies four sets of properties, each set containing a single different one of the identified properties. Similarly, for a first iteration of the generalizing process, performing step 132 for the second cluster identifies three sets of properties, each set containing a single different one of the identified properties.

The generalizing process 130 then performs a generalization assessment process 135 for each set of properties identified in step 132.

The generalization assessment process comprises a first step 136 of identifying the number of condition meeting binary data records. A condition meeting binary data record is one that contains binary values that attribute each of the set of properties to their corresponding binary records.

Thus, for the set of example binary data records (set out in Tables 2 and 3), if a set of properties identified in step 132 for the first cluster contains only property A, then the only condition meeting binary data record in the first cluster will be the binary data record for Subject 1.

As another example, for the set of example binary data records (set out in Tables 2 and 3), if a set of properties identified in step 132 for the first cluster contains only property B, then the only condition meeting binary data records in the first cluster will be the binary data records for Subject 1 and Subject 4.

The generalization assessment process 135 also comprises a second step 137 of, responsive to the number of condition meeting binary data records being greater than 0 and less than a first predetermined number, generalizing, in all binary data records of the cluster of binary data records, the binary values associated with at least one of the set of properties.

In the context of the present invention, a step of generalizing comprises marking the binary data value as unknown (i.e., not 0 or 1), e.g., changing the binary data value to an uncertainty or null value. This may, for instance, comprise simply deletion of the binary data value (e.g., so that it becomes a "null" value). Other suitable marking approaches are well known in the field.

The first predetermined number may, for instance, be set or defined by a user or individual and/or for a particular use case scenario of the proposed method (e.g., be predefined). More particularly, the first predetermined number may be the value for k in the k^{m} anonymous model.

Step 137 may be sub-divided into a determining sub-step 137A and a generalization sub-step 137B. The determining sub-step 137A determines whether the number of condition meeting binary data records N_{CM} falls between 0 and the first predetermined number (k), i.e., whether 0 < N_{CM} < k. Sub-step 137B may be performed responsive to a positive determination in sub-step 137A. The generalization sub-step 137B comprises generalizing the binary values associated with at least one (e.g., only one) of the set of properties undergoing the (instance of the) generalization assessment process 135.

There are various approaches to performing the generalization assessment process 135 for each set of properties identified in step 132 if there is more than one set of properties identified in step 132.

In a first approach, each iteration of the generalization process 135 is performed in sequence. Thus, the first step 136 and second step 137 are performed for a first iteration before being repeated for a second iteration.

In a second approach, iterations of the generalization process are performed in parallel. For instance, step 136 and sub-step 137A may be performed for each set of properties identified in step 132. Sub-step 137B may then be performed by generalizing the binary values associated with the most common property amongst all sets of properties associated with between 0 and the first determined number of condition meeting binary data records. If more than one property is the most common, then an arbitrary or random selection may be made as to which property (of the most common properties) functions as the most common property. The generalization assessment process may then be repeated until no sets of properties are associated with between 0 and the first determined number of condition meeting binary data records.

As a working example of the second approach, consider a scenario in which during a particular iteration of the generalizing process for the first cluster (identified in Table 3), the sets of properties identified in step 132 include: (B, C); (B; E); and (C; E).

An iteration of steps 136 and 137A may be performed for each of these sets of properties. In this example, if the first predetermined number k = 3, then all three sets of properties ((B, C); (B; E); and (C; E)) are identified as having between 0 and the first predetermined number of condition-meeting data records.

Accordingly, an iteration of step 137B may be performed by generalizing, in the first cluster, binary values associated with one of the properties of the sets of properties having between 0 and the first predetermined number of condition-meeting data records. This property may be the most common property amongst all sets of properties identified as having between 0 and the first predetermined number of condition-meeting data records. As all three properties (B, C, E) are equally common, one of them (e.g., B) is (pseudo)randomly selected to act as the most common property.

Another iteration of steps 136 and 137A is then performed for each of the sets of properties. In the scenario in which property B has been generalized, step 136 only identifies the set of properties (C, E) as having between 0 and the first predetermined number of condition-meeting data records. This is because the binary values of binary data records in the first cluster associated with property B have been generalized, such that the number of condition meeting data records for property B is now 0.

Another iteration of step 137B is then performed by generalizing, in the first cluster, binary values associated with one of the properties of the sets of properties having between 0 and the first predetermined number of condition-meeting data records (e.g., one of property C and E). As properties C and E are equally common, one of them (e.g., C) may be (pseudo)randomly selected to act as the most common property.

Another iteration of steps 136 and 137A is then performed for each of the sets of properties. In the scenario in which properties B and C have been generalized (in previous iterations), then no properties are identified as having between 0 and the first predetermined number of condition-meeting data records. The iterative repetition of the generalization assessment process can thereafter end.

To facilitate the iterative performance of the generalization assessment process 135 for each set of N properties, the generalization assessment process 135 may further comprise a step 139A of determining whether all sets of N properties have been processed. Responsive to a positive determination, the iterative repetition of generalization assessment process 135 ends. Responsive to a negative determination the next set of N properties may be selected in a step 139B. Alternatives or variations to such techniques will be readily apparent to the skilled person (e.g., if following the second approach outlined above).

To facilitate the performance of one or more iterations (e.g., m iterations) of the generalization process 130, the generalization process may further comprise (after completion of an iteration of the generalization process) a step 140 of determining whether m iterations of the generalization process 130 have been performed for the cluster. Responsive to a positive determination, the iterative performance of the generalization process for that cluster may end. Responsive to a negative determination, the generalization process 130 is repeated (i.e., step 131 is repeated).

To facilitate the iterative performance of the generalization process 130 for each cluster, the generalization process may further comprise (after performing m iterations of the generalization process for a cluster) a step 151 of determining whether all clusters identified in step 120 have been processed. Responsive to a positive determination, the iterative repeating of the generalization process ends, e.g., in a step 152. Responsive to a negative determination, the next cluster is identified, e.g., in a step 152, and the iterations of the generalization process 130 is repeated for the next cluster.

As previously noted, m represents the maximum number of properties of a single record for which a potential attacker is unable to distinguish fewer than k records. Thus, the number of iterations may be the value for m in the k^{m} anonymous model. It will be appreciated that the value for m is predefined, e.g., during a set-up process or representing a default value for the k^{m} anonymization.

A full working outcome of performing one or more iterations of the generalization process for the example set of binary data records, clustered as set out in Table 3 is hereafter provided for improved contextual understanding. In this scenario, the number of iterations of the generalization process 150 is 2 and the first predetermined number (k) is 2.

During a first iteration of the generalization process for the first cluster, properties A, B, C and E (but not D) are identified properties. Each identified property acts as a set of N identified properties, where N = 1 for the first iteration. For the generalization assessment process, the only identified property for which between 0 and 2 (i.e., 1) binary data values (in the first cluster) associates said property to its corresponding binary data record is property A. Accordingly, the binary values associated with property A are generalized for each binary data record in the first cluster.

During a second iteration of the generalization process for the first cluster, properties B, C and E (but not A, which has been generalized, or D), are identified properties. Accordingly, the sets of properties include: (B, C); (B, E); and (C, E) - where N = 2 for the second iteration. For the generalization assessment process, the only set of properties for which between 0 and 2 (i.e., 1) binary data records contain binary data values attributing said set of properties to said binary data record is (B, E). Accordingly, the binary values associated with one of properties B and E are generalized for each binary data record in the first cluster.

Thus, the outcome of performing two iterations of the generalization process on the first cluster is that the binary data values (in the first cluster) associated with property A and one of properties Band E are generalized (e.g., property B).

During a first iteration of the generalization process for the second cluster, properties A, C and D (but neither B or E) are identified properties. Each identified property acts as a set of N identified properties, where N = 1 for the first iteration. For the generalization assessment process, the only identified property for which between 0 and 2 (i.e., 1) binary data value (in the second cluster) associates said property to its corresponding binary data record is property C. Accordingly, the binary values associated with property C are generalized for each binary data record in the second cluster.

During a second iteration of the generalization process for the second cluster, properties A and D (but not C, which has been generalized, B or E), are identified properties. Accordingly, the set(s) of properties includes only: (A, D) - where N = 2 for the second iteration. For the generalization assessment process, there are no set of properties for which between 0 and 2 (i.e., 1) binary data records contain binary data values attributing said set of properties to said binary data record. Accordingly, no further generalization is required.

Thus, the outcome of performing two iterations of the generalization process on the second cluster is that the binary data values (in the second cluster) associated with property C are generalized.

Table 4 illustrates the outcome of the generalization process on the set of binary data records. The symbol * represents a generalized binary data value, e.g., a binary data value that has been marked as uncertain. From Table 4, it will be clear that all binary data records belonging to a same cluster have the binary values for the same group of one or more properties generalized, e.g., marked as uncertain.

**TABLE 4**

| | Property | | | | | |
|---|---|---|---|---|---|---|
| Subject | A | B | C | D | E | Cluster |
| 1 | * | 1 | 1 | 0 | * | 1 |
| 2 | 1 | 0 | * | 1 | 0 | 2 |
| 3 | * | 0 | 1 | 0 | * | 1 |
| 4 | * | 1 | 1 | 0 | * | 1 |
| 5 | 1 | 0 | * | 1 | 0 | 2 |

It has previously been described how a clustering process is performed on the plurality of binary data records to produce the at least one cluster of binary data records.

Preferably, the clustering process is configured such that the at least one cluster of binary data records contains less than a second predetermined number of clusters. In particular, the second predetermined number of clusters may be the total number of binary data records (Q) divided by the first predetermined number (k), i.e., Q/k. More particularly, the at least one cluster may be the value of Q/k rounded down to the nearest integer.

In preferred examples, each cluster contains at least the first predetermined number of binary data records. Example clustering approaches for achieving this goal are hereafter described.

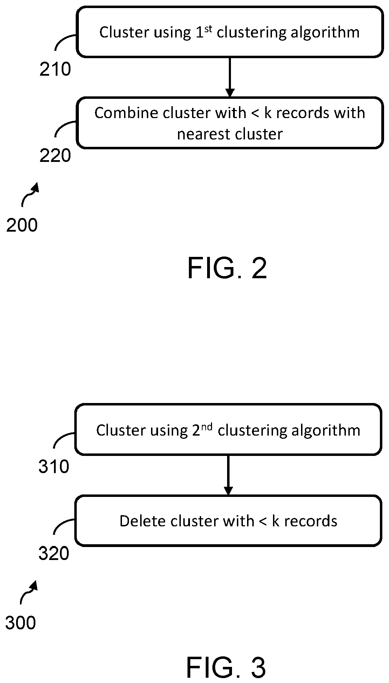

Fig. 2 illustrates a first example of a clustering process 200 to be performed on the plurality of binary data records.

The clustering process 200 comprises a step 210 of clustering the plurality of binary data records using a first clustering algorithm. The first clustering algorithm may, for instance, be a k-modes algorithm. Other suitable examples of clustering algorithms have been previously described.

The clustering process also comprises a step 220 of combining any cluster of binary data records having fewer than the first predetermined number of binary data records with a nearest cluster of binary data records. Step 220 may be iteratively repeated, where necessary, until each cluster of binary data records comprises no less than the first predetermined number of binary data records.

This approach advantageously avoids a scenario in which it is not possible for a cluster to contain fewer than the first predetermined number of binary data records, which would otherwise lead to all binary data values (attributing a particular property to a binary data record) being generalized.

Fig. 3 illustrates a second example of a clustering process 300 to be performed on the plurality of binary data records.

The clustering process 300 comprises a step 310 of clustering the plurality of binary data records using a second clustering algorithm. The second clustering algorithm may, for instance, be a k-modes algorithm. Other suitable examples of clustering algorithms have been previously described.

The clustering process also comprises a step 320 of removing any cluster of binary data records having fewer than the first predetermined number of binary data records from the at least one cluster of binary data records. This approach advantageously avoids a scenario in which it is not possible for a cluster to contain fewer than the first predetermined number of binary data records, which would otherwise lead to all binary data values being generalized.

Of course, in either variant of the clustering process embodied above, the total number of the plurality of binary data records should be larger than the first predetermined number.

The previously disclosed method provides a technique for generalizing data records. This includes a step of obtaining a plurality of binary data records. In some examples, this step comprises generating the plurality of binary data records from a respective plurality of data records containing non-binary values.

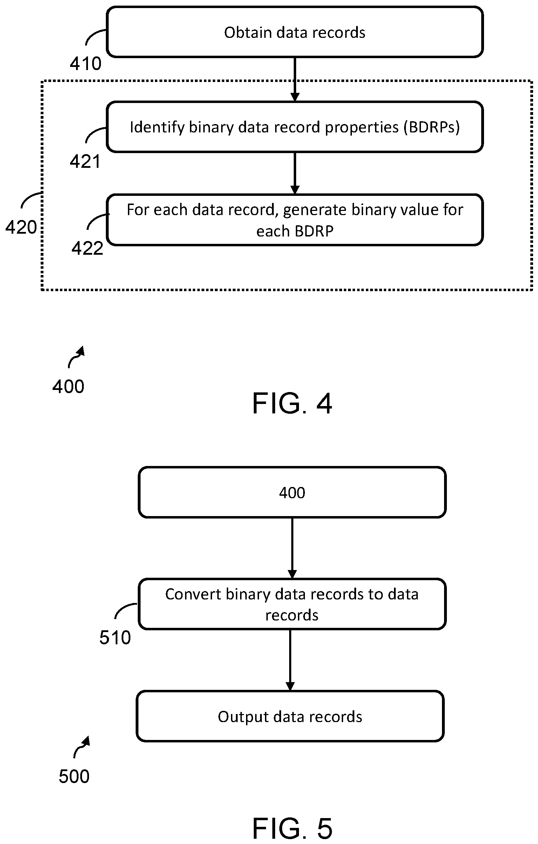

Fig. 4 illustrates a process 400 for obtaining a plurality of binary data records that may be integrated into embodiment. The process 400 may be performed or executed by an appropriately configured processing system.

The process 400 comprises a step 410 of obtaining a plurality of data records, wherein each data record comprises a plurality of non-binary values that each identify a different property attributed to a subject of the data record.

The plurality of data records may, for instance, be obtained, retrieved or otherwise received from an external processing system or memory.

In particular, each data record may comprise one or more textual values that identifies a property associated with the subject of the data record. Each textual value may, for instance, be a textual representation of the property to be associated with the subject of the data record. By way of working example, if each data record is for a student in an educational facility, then each textual value may be a textual representation of a school discipline/subject taken by the subject (e.g., "Chinese", "Math", "Physics" and so on).

The process 400 also comprises a step 420 of converting each data record into a binary data record. Step 420 may be performed by carrying out a sub-step 421 of identifying, as binary data record properties, all properties identified by any non-binary value of any of the plurality of data records and a sub-step 422 of for each data record, generating a binary value for each binary data record property, each generated binary value identifying whether or not the data record contains a non-binary value that identifies that the subject is associated with the binary data record property.

Sub-step 422 effectively creates a vector of binary values for each data record. Different locations within the vectors will represent different properties, making it possible to convert the vector back into a set of non-binary values for a data record. The number of binary values in each vector is equal to the number of binary data record properties.

This technique effectively converts, for each data record, a set of textual values or other non-binary values into a string or vector of binary values - thereby forming the plurality of binary data records.

Fig. 5 illustrates a method 500 according to a further embodiment.

The method 500 comprises performing the method 100 according to a previously described embodiment.

The method 500 further comprises a step 510 of, after performing the one or more iterations of the generalizing process for each cluster of binary data records, converting each binary data record into a respective data record containing one or more non-binary values, each non-binary value identifying a property to be associated with a subject of the data record. The subject of the data record is the same subject as for the binary data record from which it is converted.

In particular, step 510 may comprise, for each binary data record, only generating a non-binary value for those binary values that associate a respective property with the subject of the binary data record. This can be readily performed by assigning, as a non-binary value, a label for the property associated with an appropriate binary value.

Step 510 can be readily performed if the location of each binary value in the binary data record corresponds to a known property. In particular, a non-binary value can be generated by using a predetermined (e.g., textual) label for the property.

In step 510, binary values that have been generalized (e.g., marked as uncertain) can also be marked as uncertain after conversion to a non-binary value in the data record. This can be achieved, for instance, by inserting an asterisk or other identifier after the non-binary value or by using any other suitable flagging technique (e.g., a separate flag variable for each non-binary value).

Thus, step 510 may comprise, after performing the one or more iterations of the generalizing process for each cluster of binary data records: converting each binary data record into a respective data record containing one or more non-binary values by, for each binary data record: for each binary value that associates a property with the subject of the binary data record, defining, for the data record, a non-binary value identifying said associated property with the data record; for each generalized binary value, defining, for the data record, a non-binary value that identifies an uncertain relationship between the subject of the data record and the property associated with the generalized binary value.

Table 5 illustrates a set of data records produced by converting each binary data record into a respective data record. Each data record contains one or more non-binary values that identifies a property associated with the subject of the data record (by a corresponding binary value in the binary data record). Each data record also provides a marked non-binary value for those properties associated with binary values marked as uncertain in the corresponding binary data record.

In particular, Table 5 represents the set of data records producing by converting the binary data records (with uncertain values) set out in Table 4. In this scenario, each of properties A, B, C, D and E is associated with a respective school subject/discipline as follows: A = Chinese; B = Math; C = English; D = French and E = Physics.

**TABLE 5**

| Subject | Data | | | |
|---|---|---|---|---|
| 1 | Chinese* | Math | English | Physics* |
| 2 | Chinese | English* | French | |
| 3 | Chinese* | English | Physics* | |
| 4 | Chinese* | Math | English | Physics* |
| 5 | Chinese | English* | French | |

In generating the data record, each data record may optionally further comprise an identifier of the subject. This may be omitted in some variations for improved anonymization, e.g., to reduce a risk of the subject identifier being transmitted to an external or third party.

Method 500 may further comprise a step 520 of outputting the/all (converted) data records. It will be appreciated that, in practice, the output of the step 510 need not be in the form of a table but may, for instance, take the form of a data stream or other approach for defining a dataset. As can be seen from the Tabel 5 above and above embodiments, the present disclosure provides a generalization method without the necessity for predefining the generalization hierarchy. The proposed method also retains the original information in the dataset as maximum as possible by keeping most values in the dataset with a minimal generalization.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

There is also proposed a non-transitory storage medium that stores or carries a computer program or computer code that, when executed by a processing system, causes the processing system to carry out any herein described method.

In some alternative implementations, the functions noted in the block diagram(s) or flow chart(s) may occur out of the order noted in the Figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. The mere fact that certain measures are recited in mutually different dependent claims does not indicate that a combination of these measures cannot be used to advantage.

In the claims, the word "comprising" does not exclude other elements or steps, and the indefinite article "a" or "an" does not exclude a plurality. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

A single processor or other unit may fulfill the functions of several items recited in the claims. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A computer-implemented method for generalizing data records, the computer-implemented method comprising:
obtaining a plurality of binary data records, each binary data record comprising a plurality of binary values each associated with a different property for a subject of the binary data record, where each binary value identifies whether or not the property is attributed to the subject of the binary data record;
performing a clustering process on the plurality of binary data records to produce at least one cluster of binary data records; and
for each cluster of binary data records, performing one or more iterations of a generalizing process comprising:
identifying, as identified properties, any properties for which a non-zero number of binary values of any data records in said cluster attribute said property to their respective binary data records;
identifying any sets of properties, wherein each set comprises a different combination of N identified properties; and
performing a generalization assessment process for each set of properties, the generalization assessment process comprising:
a first step of identifying the number of condition meeting binary data records, wherein each condition meeting binary data record contains binary values that attribute each of the set of properties to their corresponding binary records; and
a second step of, responsive to the number of condition meeting binary data records being greater than 0 and less than a first predetermined number, generalizing, in all binary data records of the cluster of binary data records, the binary values associated with the set of properties,
wherein the value of N begins at 1 and increases by 1 for each iteration of the generalizing process.

2. The computer-implemented method of claim 1, wherein obtaining the plurality of binary data records comprises:
obtaining a plurality of data records, wherein each data record comprises a plurality of non-binary values that each identify a different property attributed to a subject of the data record; and
converting each data record into a binary data record.

3. The computer-implemented method of claim 2, wherein the step of converting each data record into a binary data record comprises:
identifying, as binary data record properties, all properties identified by any non-binary value of any of the plurality of data records; and
for each data record, generating a binary value for each binary data record property, each generated binary value identifying whether or not the data record contains a non-binary value that identifies that the subject is associated with the binary data record property.

4. The computer-implemented method of any of claims 1 to 3, wherein the at least one cluster of binary data records contains less than a second predetermined number of clusters.

5. The computer-implemented method of claim 4, wherein the second predetermined number of clusters is the total number of binary data records divided by the first predetermined number.

6. The computer-implemented method of any of claims 1 to 5, wherein the performing a clustering process comprises:
clustering the plurality of binary data records using a first clustering algorithm; and
combining any cluster of binary data records having fewer than the first predetermined number of binary data records with a nearest cluster of binary data records.

7. The computer-implemented method of any of claims 1 to 5, wherein the performing a clustering process comprises:
clustering the plurality of binary data records using a second clustering algorithm; and
removing any cluster of binary data records having fewer than the first predetermined number of binary data records from the at least one cluster of binary data records.

8. The computer-implemented method of any of claims 1 to 7, wherein generalizing a binary value comprises marking the binary value as having an unknown value.

9. The computer-implemented method of any of claims 1 to 8, wherein performing the generalization assessment process for each set of properties comprises sequentially performing an iteration of the generalization assessment process on each set of properties in turn.

10. The computer-implemented method of any of claims 1 to 8, wherein performing the generalization assessment process for each set of properties comprises:
performing the first step of each generalization assessment process sequentially; and
performing the second step of each generalization assessment process in parallel to one another.

11. The computer-implemented method of any of claims 1 to 10, wherein, for each identified cluster, the performing one or more iterations of the generalizing process is terminated responsive to, after performing any generalization assessment process, the number of properties associated with binary values that are not generalized is fewer than 2.

12. The computer-implemented method of any of claims 1 to 11, wherein the one or more iterations of the generalizing process comprises a third predetermined number of iterations.

13. The computer-implemented method of any of claims 1 to 12, further comprising, after performing the one or more iterations of the generalizing process for each cluster of binary data records:
converting each binary data record into a respective data record containing one or more non-binary values by, for each binary data record:
for each binary value that associates a property with the subject of the binary data record, defining, for the data record, a non-binary value identifying said associated property with the data record;
for each generalized binary value, defining, for the data record, a non-binary value that identifies an uncertain relationship between the subject of the data record and the property associated with the generalized binary value.

14. A computer program product comprising computer program code means which, when executed on a computing device having a processing system, cause the processing system to perform all of the steps of the method according to any of claims 1 to 13.

15. A processing system for generalizing data records, the processing system being configured to:
obtain a plurality of binary data records, each binary data record comprising a plurality of binary values each associated with a different property for a subject of the binary data record, where each binary value identifies whether or not the property is attributed to the subject of the binary data record;
perform a clustering process on the plurality of binary data records to produce at least one cluster of binary data records; and
for each cluster of binary data records, perform one or more iterations of a generalizing process comprising:
identifying, as identified properties, any properties for which a non-zero number of binary values of any data records in said cluster attribute said property to their respective binary data records;
identifying any sets of properties, wherein each set comprises a different combination of N identified properties; and
performing a generalization assessment process for each set of properties, the generalization assessment process comprising:
a first step of identifying the number of condition meeting binary data records, wherein each condition meeting binary data record contains binary values that attribute each of the set of properties to their corresponding binary records; and
a second step of, responsive to the number of condition meeting binary data records being greater than 0 and less than a first predetermined number, generalizing, in all binary data records of the cluster of binary data records, the binary values associated with the set of properties,
wherein the value of N begins at 1 and increases by 1 for each iteration of the generalizing process.
